# EUROPÄISCHE PATENTSCHRIFT

(11) **EP 0 407 730 B1**
(45) Veröffentlichungstag und Bekanntmachung des Hinweises auf die Patenterteilung: **03.11.1993**
(21) Anmeldenummer: 90110535.3
(22) Anmeldetag: 02.06.1990
(51) Int. Cl.: F23C 11/02, F22B 31/00, B01J 8/38

(54) **Feuerung insbesondere Wirbelschichtfeuerung**
Furnace, in particular fluidised bed furnace
Foyer, notamment foyer à lit fluidisé

(30) Priorität: 11.07.1989 DE 3922765
(43) Veröffentlichungstag der Anmeldung: 16.01.1991
(73) Patentinhaber: DEUTSCHE BABCOCK ENERGIE- UND UMWELTTECHNIK AKTIENGESELLSCHAFT, 46049 Oberhausen (DE)
(72) Erfinder: Wiehn, Helmut, Dr., D-4200 Oberhausen 1 (DE); Rehwinkel, Heiko, Dr., D-4250 Bottrop (DE); Möllenhoff, Horst, Dr., D-4330 Mülheim/Ruhr (DE); Meier, Hans-Joachim, D-4234 Alpen-Menzelen (DE)
(74) Vertreter: Müller, Jürgen, Dipl.-Ing.

(56) Entgegenhaltungen:
- WO-A-87/06679
- WO-A-89/00660
- WO-A-90/05020
- DE-A- 3 440 583
- FR-A- 2 564 747
- GB-A- 2 148 734
- US-A- 2 818 049
- US-A- 4 419 965
- US-A- 4 796 546

## Beschreibung

Die Erfindung betrifft eine Feuerung, insbesondere eine Wirbelschichtfeuerung mit den Merkmalen des Oberbegriffes des Anspruches 1 und ein Verfahren zur Verbrennung in einer solchen Feuerung.

Aus der WO-A-8 900 660 ist eine Wirbelschichtfeuerung mit einer von unten nach oben durchströmten Brennkammer bekannt, deren Gasauslaß in einen filtrierenden, aus Filterrohren gebildeten Abscheider mündet. Der Feststoffauslaß des Abscheiders ist mit einem Standrohr verbunden, das über einen Siphon und einen Feststoffeinlaß mit der Brennkammer in Verbindung steht. Die abgeschiedenen Feststoffe werden vor dem Eintritt in die Brennkammer nicht gekühlt. Lediglich für die aus dem System abgezogenen Feststoffe ist ein externer Aschekühler vorgesehen. Das in dem Abscheider gereinigte Gas wird über Reingasauslässe abgezogen und einer Gasturbine zugeführt. Damit wird die bei der Verbrennung in der Brennkammer freiwerdende Wärme nur auf das Gas übertragen, während der Feststoff mit der in ihm gebundenen Wärme in dem System umgewälzt wird.

Eine Wirbelschichtfeuerung mit einem integrierten Feststoffabscheider ist aus der WO-A-8 706 679 bekannt. Der Gasaustritt der Brennkammer dieser Wirbelschichtfeuerung mündet in einen Zentrifugalabscheider und in einen zweiten Zug, in dem Konvektionheizflächen angeordnet sind. Der in dem Abscheider abgetrennte Feststoff gelangt in einen Sammelraum, in dem eine Kühlschlange angeordnet sein kann.

Bei einer bekannten, mit einer zirkulierenden Wirbelschicht versehenen Wirbelschichtfeuerung (EP-B-0 103 613) wird der Feststoff aus dem Rauchgas über Drallabscheider abgetrennt, in einem Sammelbunker gesammelt und von dort in die Wirbelschicht zurückgeführt. Der abgetrennte Feststoff wird vor seiner Rückführung in die Wirbelschicht nicht nennenswert gekühlt, da der Sammelbunker mit Ausnahme der aus den Rohrwänden gebildeten Wände keine Heizflächen enthält und weil der Feststoff nur mit soviel Luft fluidisiert wird, daß gerade eine gleichmäßige Förderung erreicht wird.

Bei einer anderen bekannten zirkulierenden Wirbelschichtfeuerung (DE-C-2 624 302) wird der Feststoff im Kreislauf durch ein aus Wirbelschichtreaktor, Zyklonabscheider und Rückführleitung bestehendes Zirkulationssystem bei hoher Suspensionsdichte im Rauchgas und bei gleichbleibender Systemtemperatur geführt. Aus diesem Kreislauf wird ein Teil des Feststoffes entnommen, in einem separaten, mit Heizflächen versehenen und von Luft durchströmten Fließbettkühler gekühlt und wenigstens als Teilstrom in die Wirbelschichtfeuerung zurückgeführt.

Es ist weiterhin eine Wirbelschichtfeuerung mit einer Wirbelschicht und einem erhöhten Feststoffumlauf bekannt (BWK 40 (1988), Seiten 273 bis 276), bei der in den Freiraum oberhalb der Wirbelschicht Bündelheizflächen zur Kühlung von Rauchgas und Flugstaub angeordnet sind.

In der stationären Wirbelschicht einer anderen bekannten Wirbelschichtfeuerung (VGB Kraftwerkstechnik 67 (1987), Heft 8, Seiten 571 bis 577) sind Tauchheizflächen angeordnet. Die Wirbelschichtfeuerung wird unter Druck betrieben, wobei die Wirbelbrennkammer von einem Druckgefäß umgeben ist. Das heiße, die Wirbelbrennkammer verlassende Rauchgas wird einer Gasturbine zugeführt.

Bei den bekannten Wirbelschichtfeuerungen wird in der fluidisierten Feststoffschicht ein Wärmestrom freigesetzt, der an Heizflächen übertragen oder mit dem Rauchgas aus der Wirbelbrennkammer ausgetragen wird. Diese Heizflächen sind bei Wirbelschichtfeuerungen mit stationärer Wirbelschicht als Tauchheizflächen ausgebildet. Da aus konstruktiven und verfahrenstechnischen Gründen die Querschnittsfläche der Wirbelschicht nicht beliebig gesteigert werden kann, ist bei vorgegebener Leistung die Fluidisierungsgeschwindigkeit verhältnismäßig hoch. Die Tauchheizflächen unterliegen daher innerhalb der Wirbelschicht einer erhöhten Erosion, die zu Materialabzehrungen führt.

Bei Wirbelschichten mit erhöhtem Feststoffumlauf und bei zirkulierenden Wirbelschichten wird auf die Anordnung von Tauchheizflächen in der Wirbelbrennkammer verzichtet. Statt dessen ist die Wirbelbrennkammer mit Wand- und/oder Schottenheizflächen versehen, die von dem hoch mit Staub beladenen Rauchgas überströmt werden. Bei vorgegebener Leistung ist auch die entstehende Gasmenge vorgegeben. Die Strömungsquerschnitte können aus konstruktiven Gründen nicht beliebig vergrößert werden. Dadurch ergeben sich bestimmte minimale Gasgeschwindigkeiten, die nicht unterschritten werden können. Das mit diesen Geschwindigkeiten strömende, staubbeladene Gas führt zu Erosionen an den Wand- und Schottenheizflächen.

Bei der Verwendung von gestufter Luftzuführung zur weitgehenden Reduzierung der NOₓ-Emission erfolgt durch die dann im Reaktionsraum zum Teil befindlichen reduzierenden Verhältnisse ein zusätzlicher korrosiver Angriff auf die Heizflächen, der nur durch Einsatz sehr hochwertiger Materialien beherrscht werden kann.

Unter Druck betriebene Wirbelschichtfeuerungen mit einer stationären Wirbelschicht werden dadurch geregelt, daß mit sinkender Last die Betthöhe verringert wird. Bei verringerter Betthöhe ragen die Tauchheizflächen zum Teil aus der Wirbelschicht heraus, so daß weniger Wärme aus der Wirbelschicht abgeführt wird. Gleichzeitig sinkt damit die Gastemperatur ab, wodurch der nachgeschalteten Gasturbine Gas mit einer von der Last abhängigen Temperatur zugeführt wird.

Der Erfindung liegt die Aufgabe zugrunde, die gattungsgemäße Feuerung so auszubilden, daß die Nachteile hinsichtlich der Gestaltung des Reaktionsraumes sowie der Erosion und der Korrosion an den Heizflächen vermieden werden, daß die geometrischen Abmessungen der Feuerung speziell bezüglich des Verhältnisses von Reaktorquerschnitt zu Reaktorhöhe weitgehend frei wählbar sind und daß die Gastemperatur von der Last unabhängig ist.

Diese Aufgabe wird bei einer gattungsgemäßen Feuerung erfindungsgemäß durch die kennzeichnenden Merkmale des Anspruches 1 gelöst. Vorteilhafte Ausgestaltungen der Erfindung sind in den Unteransprüchen angegeben.

Indem die durch die Verbrennung entbundene Wärme überwiegend dem aus dem Gas abgetrennten Feststoff entzogen wird und nur gekühlter Feststoff in die Feuerung rückgeführt wird, sind die volumenbezogenen Vorgänge der Wärmeentbindung in einer Reaktionszone, der Nachreaktion in einer Nachbrennzone sowie der Rauchgasreinigung und der Wärmeabfuhr in einer Feststoffkühlzone voneinander getrennt. Die genannten Vorgänge können somit variiert werden, ohne daß das eine Rückwirkung auf den Gesamtprozeß hat. Damit können die Höhe und der Querschnitt des einem dieser Vorgänge zugeordneten Abschnittes der Feuerung frei gewählt werden. Man ist damit in der Lage, in dem Abschnitt, der erosionsgefährdete Heizflächen enthält, die Gasgeschwindigkeit soweit abzusenken, daß diese Heizflächen keinem nennenswerten Angriff durch Erosion unterliegen.

Der sich in der Kühlzone im zweiten Zug ansammelnde Feststoff weist auf Grund einer Sichtung in der Brennkammer eine geringe Korngröße auf. Es genügen damit schon geringe Gasgeschwindigkeiten, um diesen Feststoff zu fluidisieren. Der durch die Fluidisierung bewirkte hohe Wärmeübergangskoeffizient ermöglicht es, kleine Heizflächen einzusetzen. Da in der Kühlzone keine reduzierende Gasatmosphäre vorliegt, lassen sich hier auch hochbelastbare Heizflächen aus austenitischen Werkstoffen einsetzen.

Die erosionsgefährdeten Heizflächen können aus dem Abschnitt herausgenommen werden, in dem hohe Gasgeschwindigkeiten einzustellen sind. Innerhalb der Reaktionszone und der Nachbrennzone läßt sich die für den Ausbrand des Brennstoffes notwendige Verweilzeit durch das frei wählbare Verhältnis von Querschnitt zu Höhe der Feuerung und damit durch die Gasgeschwindigkeit optimal einstellen, so daß bei einem guten Ausbrand Kohle mit einem breiten Kornspektrum aufgegeben werden kann. Über die Abfuhr der Wärme aus dem abgetrennten Feststoff in der Kühlzone und die Wahl des Luftüberschusses in der Reaktionszone läßt sich die Wirbeltemperatur und damit die Gastemperatur für alle Lastzustände einstellen. Zusätzlich kann durch Nachverbrennung die Gastemperatur am Ende der Nachbrennzone auf Werte angehoben werden, die oberhalb der für den Betrieb einer Wirbelschicht notwendigen Temperatur liegen. Schließlich ist auch die Menge des in die Reaktionszone rückgeführten Feststoffes frei wählbar, da der Feststoff in der Kühlzone auf eine einstellbare Temperatur gekühlt werden kann.

Mehrere Ausführungsbeispiele der Erfindung sind in der Zeichnung dargestellt und werden im folgenden näher erläutert. Es zeigen:
- Fig. 1: eine schematische Anordnung einer Wirbelschichtfeuerung,
- Fig. 2: eine schematische Anordnung einer anderen Ausführungsform einer Wirbelschichtfeuerung,
- Fig. 3: die perspektivische Darstellung einer anderen Ausführungsform einer Wirbelschichtfeuerung und
- Fig. 4: das Schema einer anderen und unter Überdruck betriebenen Wirbelschichtfeuerung.

Die Feuerung wird in einer von unten nach oben durchströmten Brennkammer 1 durchgeführt, an die sich über einen Querzug 5 ein zweiter Zug 2 anschließt. Die Brennkammer 1 und der zweite Zug 2 sind durch Wände, vorzugsweise durch Rohrwände aus gasdicht miteinander verschweißten Rohren begrenzt.

In den unteren Teil der Brennkammer 1 wird über nicht gezeigte Zuführungen ein fester, flüssiger oder gasförmiger Brennstoff und Verbrennungsluft zugeführt. Die Feuerung kann eine Wirbelschichtfeuerung mit einer stationären oder einer zirkulierenden Wirbelschicht oder ein Transportreaktor mit einer Flugstromverbrennung sein. Diese Feuerung stellt eine Reaktionszone R dar, an die sich eine Nachbrennzone A anschließt, die vor einem Abscheider 10 endet, der in Strömungsrichtung des Gases hinter der Verbindung der Brennkammer 1 mit dem zweiten Zug 2 liegt. Der Nachbrennzone A wird weitere Verbrennungsluft und gegebenenfalls Zusatzbrennstoff zugeführt. Innerhalb des zweiten Zuges 2 ist eine Kühlzone C gebildet.

Im folgenden wird die Erfindung am Beispiel einer als Wirbelschichtfeuerung ausgebildeten Feuerung erläutert. Diese Feuerung umfaßt eine Wirbelschicht mit einem erhöhten Feststoffumlauf. Die folgende Beschreibung trifft sinngemäß auch auf eine hochzirkulierende Wirbelschicht oder eine Staubfeuerung mit Feststoffrezirkulation zu.

In dem unteren Teil der Brennkammer 1 ist ein Düsenboden 3 angeordnet, durch den Luft als Verbrennungsluft und als Fluidisierungsluft eingeblasen wird. Die Luft wird mit solcher Geschwindigkeit und in solcher Menge eingebracht, daß sich oberhalb des Düsenbodens 3 eine Wirbelschicht 4 vorzugsweise mit einer definierten Bettoberfläche ausbildet. Die Wirbelschicht 4 stellt die Reaktionszone R dar.

Unterhalb des Düsenbodens 3 ist die Brennkammer 1 mit einem Ascheaustrag 6 versehen, in dem ein Austragsorgan 7, zum Beispiel eine Zellradschleuse, angeordnet ist. Zwischen dem Düsenboden 3 und dem Austragsorgan 7 befindet sich eine ruhende Ascheschicht 8. Innerhalb der ruhenden Ascheschicht 8 sind Düsen 9 angeordnet. Durch diese Düsen wird zur Kühlung der Ascheschicht 8 ein gasförmiges Medium z.B. Luft oder Rauchgas eingeblasen. Das Gas gelangt zusammen mit der Fluidisierungsluft aus dem Düsenboden 3 in die Brennkammer 1.

Durch die durch den Düsenboden 3 eingeblasene Luft stellt sich in der Brennkammer 1 eine von unten nach oben gerichtete Strömung aus Rauchgas und mitgerissenen Feststoffpartikeln ein. In Strömungsrichtung des Gases ist hinter der Verbindung von Brennkammer 1 und zweitem Zug 2 ein Abscheider 10 angeordnet. Der gasseitige Austrag des Abscheiders 10 ist mit einer Gasabführleitung 11 verbunden. Die Gasabführleitung 11 ist an eine Anlage zur Weiterbehandlung des Rauchgases angeschlossen. Diese Weiterbehandlungsanlage kann entweder ein Abhitzekessel oder eine Gasturbine sein, wenn die Wirbelschichtfeuerung, wie nachfolgend noch beschrieben wird, unter einem Überdruck von z.B. 20 bar betrieben wird.

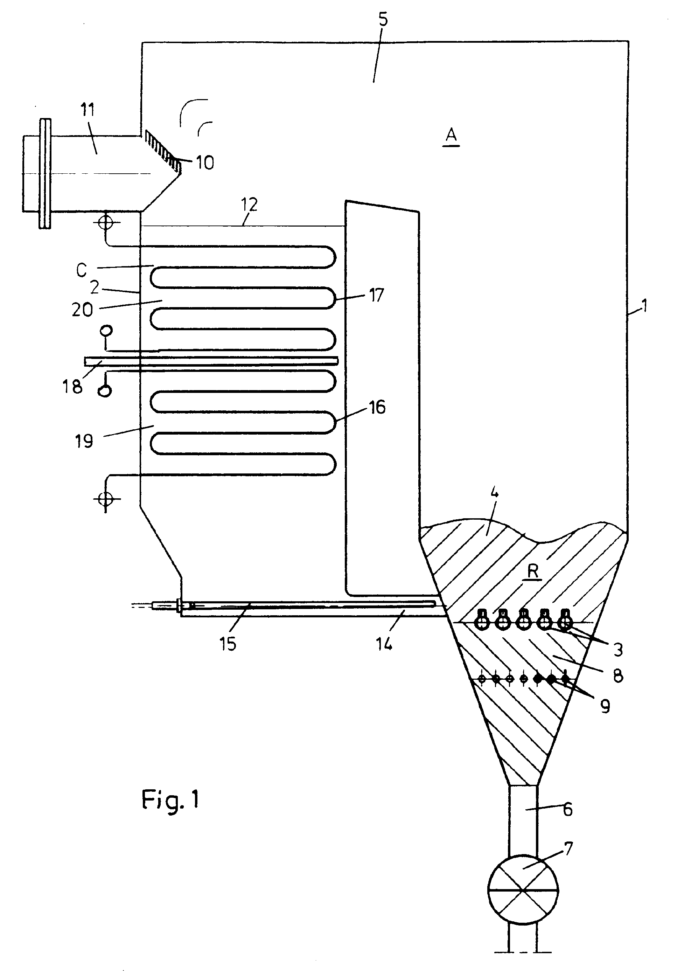

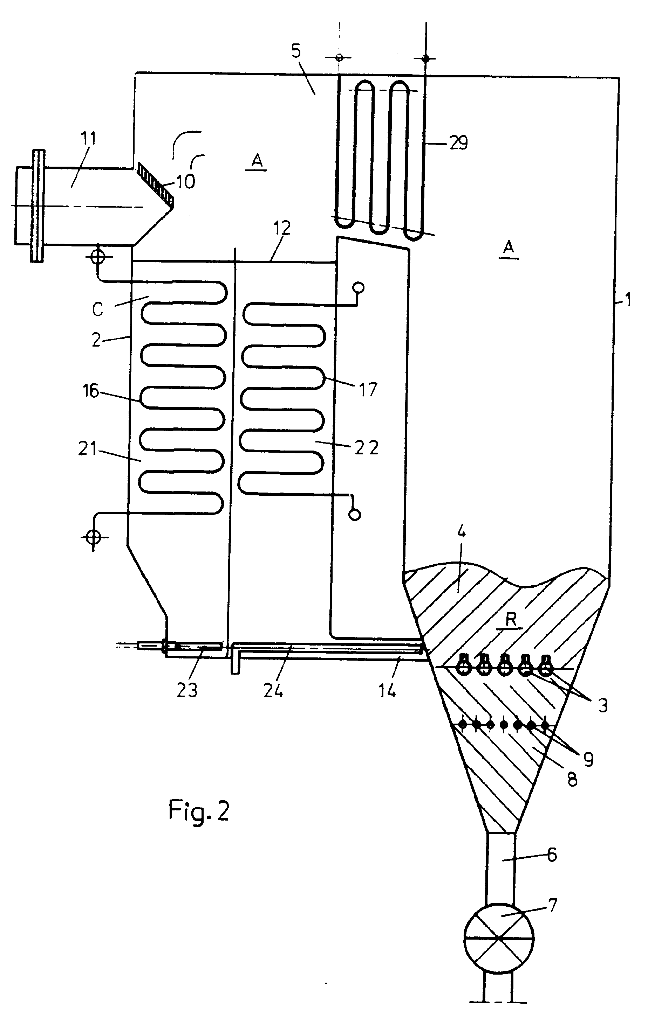

Der Abscheider 10, der in den Fig. 1 und 2 nur schematisch gezeigt ist, ist als filtrierender Abscheider ausgebildet, dessen Feststoffaustrag in den zweiten Zug 2 hineinragt. Derartige Abscheider sind zur Reinigung von Rauchgas aus Wirbelschichtfeuerungen bekannt (VDI Berichte Nr. 715 (1989) S. 289-322, insb. S. 299-309, 315-317) und zeichnen sich durch einen hohen Abscheidegrad aus.

Als Abscheider kann ein Schüttschichtfilter eingesetzt werden, das einen perforierten, geneigt angeordneten Boden umfaßt, auf dem eine Filterschicht aus einem körnigen Filtermaterial, z.B. Quarzsand, aufliegt. Als Filtermaterial kann auch Bettmaterial aus der Wirbelschicht 4 verwendet werden. Der sich auf der Filterschicht beim Durchtritt des Rauchgases ablagernde Staub wird von Zeit zu Zeit abgeblasen und gelangt in den zweiten Zug 2, in dem auf diese Weise eine Feststoffschicht 12 gebildet wird.

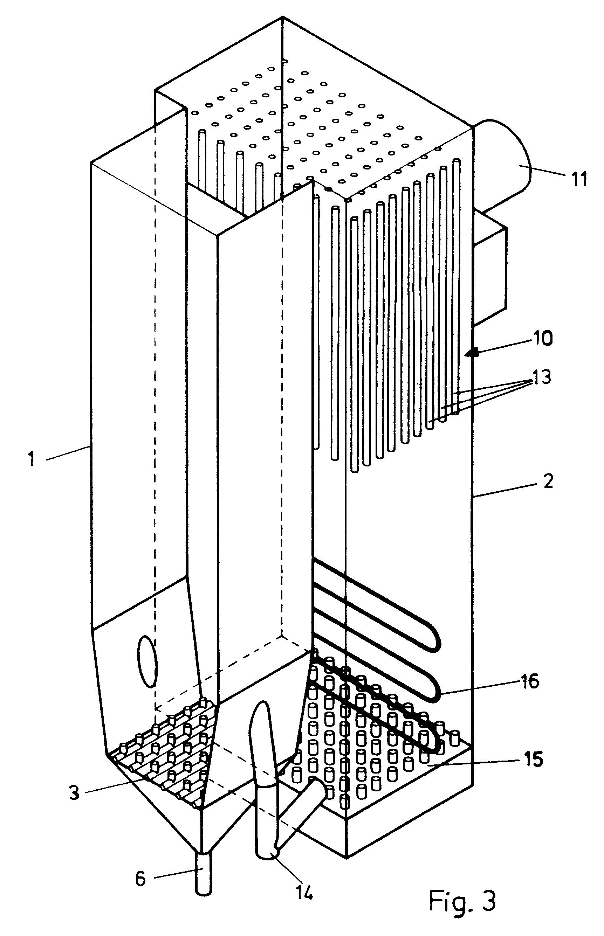

Anstelle eines Schüttschichtfilters wird bevorzugt ein Kerzenfilter verwendet. Ein solches Filter ist in Fig. 3 dargestellt und besteht aus Filterrohren 13 aus porösem, keramischen Material. Die Filterrohre 13 sind in einer Haltevorrichtung im zweiten Zug 2 befestigt. Das feststoffbeladene Gas durchströmt das poröse Filtermaterial, um auf die Reingasseite und in die Gasabführleitung 11 zu gelangen. Der Feststoff wird auf der Gasseite der Filterrohre 13 abgeschieden. Der sich bildende Belag fällt von sich aus oder beim Rückspülen in dem zweiten Zug 2 und bildet so die Feststoffschicht 12.

Der zweite Zug 2 ist am unteren Ende über eine Feststoffrückführleitung 14 mit der Brennkammer 1 oberhalb des Düsenbodens 3 verbunden. Im unteren Teil des zweiten Zuges 2 ist ein Düsenrost 15 angeordnet, durch den Luft durch die Feststoffschicht 12 geblasen wird. Anstelle von Luft kann auch ein anderes Gas, z.B. rückgeführtes Rauchgas verwendet werden. Diese Luft oder dieses Gas wird nach dem Durchströmen der Feststoffschicht 12 zusammen mit dem Rauchgas aus der Brennkammer 1 durch den Abscheider 10 und das Gasabführungsrohr 11 abgeführt. Die Luft kann auch als sekundäre Verbrennungsluft, z.B. mit Hilfe eines Ejektors in die Nachbrennzone A eingeblasen werden.

Innerhalb der Feststoffschicht 12 des zweiten Zuges 2 sind Heizflächen 16, 17 angeordnet. Diese Heizflächen 16, 17 sind von einem flüssigen oder gasförmigen Wärmeaustauschmedium wie Gas, Luft, Dampf, Wasser, Thermoöl oder Flüssigmetall durchströmt. Die Heizflächen können zusammen mit den Rohrwänden des zweiten Zuges 2 und der Brennkammer 1 an einen Wasser-Dampf-Kreislauf angeschlossen sein.

Der zweite Zug 2 kann durch das Einsetzen von weiteren Düsenrosten 18 in zwei oder mehrere übereinanderliegende Kammern 19, 20 aufgeteilt werden. Ebenso kann der zweite Zug 2 durch eine oder mehrere vertikale, ungekühlte oder aus gasdicht miteinander verschweißten Rohren gebildete Trennwände in mehrere nebeneinander liegende Kammern 21, 22 aufgeteilt werden. Jede dieser nebeneinander liegenden Kammern ist mit einem eigenen Düsenrost 23, 24 versehen. Die Düsenroste 23, 24 können daher mit unterschiedlich großen Volumenströmen beaufschlagt werden. In jeder Kammer 19, 20, 21, 22 ist ferner eine eigene Heizfläche 16, 17 vorgesehen, die in unterschiedlicher Weise, z.B. als Economiser, Verdampfer oder Überhitzer eines Wasser-Dampf-Kreislaufes geschaltet sein kann.

Der Feststoff der Feststoffschicht 12 innerhalb des zweiten Zuges 2 wird durch Wärmeabgabe an die durchgeblasene Luft oder an das durchgeblasene Gas und an das die Heizflächen 16, 17 durchströmende Wärmeaustauschmedium gekühlt. Der in dem Abscheider 10 abgetrennte und in dem zweiten Zug 2 abgekühlte Feststoff wird über die Feststoffrückführleitung 14 vollständig oder teilweise in die Brennkammer 1 zurückgeführt. Die Temperatur in der Brennkammer 1 wird dadurch gleichbleibend auf 750 bis 900 Grad C, vorzugsweise auf 850 Grad C gehalten, da die bei der Verbrennung des Brennstoffes mit Luft freiwerdende Verbrennungswärme an das Wärmeaustauschmedium in den die Brennkammer 1 begrenzenden Rohrwände und an den rückgeführten, gekühlten Feststoff abgeführt wird. Das Rauchgas tritt, wenn wie bevorzugt vorgesehen keine Heizflächen in der Nachbrennzone A angeordnet sind, mit der Temperatur der Wirbelschicht in den Abscheider 10 ein. Es ist auch möglich, in der Brennkammer 1 durch Luftunterschuß eine unvollständige Verbrennung durchzuführen, so daß das aus der Wirbelschicht 4 austretende Gas noch brennbare Bestandteile enthält. Diese brennbaren Bestandteile werden in der Nachbrennzone A nachverbrannt. Auf diese Weise kann die Temperatur des aus der Gasabführleitung 11 austretenden Rauchgases auf eine Temperatur oberhalb der Bettemperatur, z.B. auf 1000 Grad C angehoben werden. Als Verbrennungsluft für die Nachbrennzone A dient dabei die die Feststoffschicht 12 durchströmende Luft. Es kann auch gesonderte sekundäre und tertiäre Verbrennungsluft gegebenenfalls zusammen mit Zusatzbrennstoff in die Nachbrennzone A eingeblasen werden. Eine solche Verfahrensweise ist dann vorteilhaft, wenn die Wirbelschichtfeuerung unter Überdruck betrieben wird.

Je nach der Gasgeschwindigkeit, mit der die Luft oder das Gas in die Feststoffschicht 12 eingeblasen wird, bildet sich bei Gasgeschwindigkeiten unterhalb des Fluidisierungspunktes ein Festbett und bei Gasgeschwindigkeiten oberhalb des Fluidisierungspunktes ein Wirbelbett aus. Da die Wärmeübergangszahl im Wirbelbett wesentlich größer ist als im Festbett, kann über eine Änderung der Geschwindigkeit in der Nähe des Fluidisierungspunktes der die Feststoffschicht 12 durchströmenden Luft die Verteilung der dem Feststoff entzogenen Wärme auf die Luft und das Wärmeaustauschmedium in den Heizflächen 16, 17 beeinflußt werden. Um die Wärme bevorzugt an Luft oder das Gas zu übertragen, ist ein Festbett anzustreben. Soll die Wärme verstärkt auf das Wärmeaustauschmedium in den Heizflächen 16, 17 übertragen werden, ist die Feststoffschicht 12 zu fluidisieren. Diese Einflußnahme auf die Verteilung der Wärmeabfuhr läßt sich in günstiger Weise bei der beschriebenen Aufteilung des zweiten Zuges 2 in mehrere Kammern 19, 20, 21, 22 erreichen. Dabei ist es auch möglich, in einer Kammer ein Festbett und in einer anderen Kammer ein Wirbelbett aufrechtzuerhalten.

Gemäß Fig. 2 können in Strömungsrichtung des Rauchgases hinter der Reaktionszone R zwischen der Brennkammer 1 und dem zweiten Zug 2, das heißt in der Nachbrennzone A von dem Rauchgas berührte Heizflächen 29 angeordnet sein. Durch eine entsprechende Querschnittsgestaltung wird erreicht, daß die Gasgeschwindigkeit an dieser Stelle nicht zu hoch wird.

Die beschriebene Feuerung kann mit einem den Atmosphärendruck geringfügig übersteigenden Druck betrieben werden, um auf einen Saugzug verzichten zu können. Es kann auch ein Überdruck von mehr als 1 bar bis 30 bar vorzugsweise von 20 bar in der Brennkammer 1 und dem zweiten Zug 2 eingestellt werden. In diesem Fall kann das in die Gasabführleitung 11 eintretende, gereinigte Gas in einer Gasturbine entspannt oder einem chemischen Prozeß zugeführt werden.

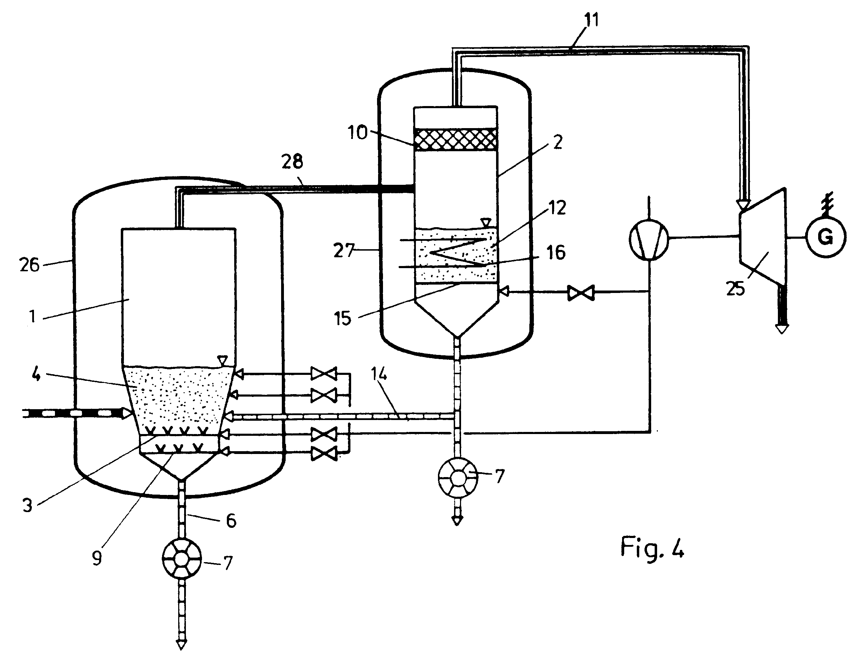

Eine besondere unter Überdruck betriebene Feuerung ist in der Fig. 4 gezeigt. Bei dieser Feuerung sind die Brennkammer 1 und der zweite Zug 2 in voneinander getrennten Druckgefäßen 26, 27 angeordnet. Eine Druckleitung 28, die die Druckgefäße 26, 27 durchdringt, verbindet die Brennkammer 1 mit dem zweiten Zug 2. Die Gasabführleitung 11 ist an eine Gasturbine 25 angeschlossen. Abweichend von der dargestellten Ausführung können auch die Brennkammer 1 und der zweite Zug 2 von einem gemeinsamen Druckgefäß umschlossen sein. Im übrigen Aufbau und in der Funktionsweise stimmt die unter Druck betriebene Ausführungsform gemäß Fig. 4 mit der unter Atmosphärendruck oder unter Überdruck betriebenen Wirbelschichtfeuerung gemäß Fig. 1 bis 3 im Grundprinzip überein.

## Patentansprüche

1. Feuerung, insbesondere Wirbelschichtfeuerung, mit einer von unten nach oben durchströmten Brennkammer (1), deren Gasaustritt mit einem filtrierenden Abscheider (10) zur Abtrennung von Feststoffen aus dem die Brennkammer (1) verlassenden Gas verbunden ist, wobei eine Rückführleitung (14) für die abgetrennten Feststoffe in die Brennkammer (1) geführt ist, dadurch gekennzeichnet, daß der Gasaustritt der Brennkammer (1) an einen zweiten Zug (2) angeschlossen ist, daß der Abscheider (10) feststoffseitig mit dem zweiten Zug (2) verbunden ist, daß der zweite Zug (2) eine von Gas, insbesondere von Luft, durchströmte Feststoffschicht (12) aufnimmt und als Feststoffkühler ausgebildet ist und daß der zweite Zug gasaustrittsseitig mit dem Abscheider (10) verbunden ist.

2. Feuerung nach Anspruch 1, dadurch gekennzeichnet, daß die Feststoffschicht (12) ein Festbett ist.

3. Feuerung nach Anspruch 1, dadurch gekennzeichnet, daß die Feststoffschicht (12) eine Wirbelschicht ist.

4. Feuerung nach einem der Ansprüche 1 bis 3, dadurch gekennzeichnet, daß der zweite Zug (2) in Kammern (19, 20, 21, 22) aufgeteilt ist und daß jede Kammer (19, 20, 21, 22) mit einem eigenen System zur Zuführung von Gas versehen ist.

5. Feuerung nach einem der Ansprüche 1 bis 4, dadurch gekennzeichnet, daß die Brennkammer (1) und der zweite Zug (2) in voneinander getrennten Druckgefäßen (26, 27) angeordnet sind und daß die Brennkammer (1) und der zweite Zug (2) durch eine Druckleitung (28) miteinander verbunden sind.

6. Feuerung nach einem der Ansprüche 1 bis 4, dadurch gekennzeichnet, daß die Brennkammer (1) und der zweite Zug (2) von einem gemeinsamen Druckgefäß umgeben sind.

7. Feuerung nach einem der Ansprüche 1 bis 6, dadurch gekennzeichnet, daß in dem Gasstrom in Strömungsrichtung hinter der Brennkammer (1) Heizflächen (29) eingehängt sind.

8. Verfahren zur Verbrennung von Brennstoff in einer Feuerung, insbesondere in einer Wirbelschichtfeuerung mit einer von unten nach oben durchströmten Brennkammer nach den Ansprüchen 1 bis 7, bei dem in einem filtrierenden Abscheider aus dem die Brennkammer verlassenden Gas Feststoffe abgetrennt und in die Feuerung zurückgeführt werden, dadurch gekennzeichnet, daß die abgetrennten Feststoffe einem zweiten Zug zugeführt werden, in dem sie als Feststoffschicht von einem Gas, insbesondere von Luft, durchströmt und durch Kühlflächen gekühlt werden.

9. Verfahren nach Anspruch 8, dadurch gekennzeichnet, daß der Volumenstrom des die Feststoffschicht durchströmenden Gases nach Maßgabe der Verteilung der abzuführenden Wärme auf das Gas und die Heizflächen eingestellt wird.

10. Verfahren nach Anspruch 8 oder 9, dadurch gekennzeichnet, daß in dem unteren Teil der Brennkammer durch Zufuhr von Brennstoff und Verbrennungsluft eine Reaktionszone gebildet wird und daß darüber bis zum Eintritt in den Abscheider durch Zugabe weiterer Verbrennungsluft eine Nachbrennzone gebildet wird.

11. Verfahren nach Anspruch 10, dadurch gekennzeichnet, daß die Temperatur in der Nachbrennzone auf einen höheren Wert als in der Reaktionszone eingestellt wird.

12. Verfahren nach Anspruch 10 oder 11, dadurch gekennzeichnet, daß die die Feststoffschicht durchströmende Luft als Verbrennungsluft in die Nachbrennzone geführt wird.

13. Verfahren nach einem der Ansprüche 10 bis 12, dadurch gekennzeichnet, daß der Nachbrennzone zusätzlicher Brennstoff zugeführt wird.

14. Verfahren nach einem der Ansprüche 8 bis 13, gekennzeichnet durch einen für den Betrieb einer Gasturbine geeigneten Überdruck in der Brennkammer und dem zweiten Zug.

15. Verfahren nach einem der Ansprüche 8 bis 13, gekennzeichnet durch einen den Atmosphärendruck geringfügig übersteigenden Druck in der Brennkammer und dem zweiten Zug.

## Claims

1. Furnace, in particular fluidised bed furnace, with a combustion chamber (1), which is flowed through upwardly from below and the gas exit of which is connected with a filtering separator (10) for separating solid substances out of the gas leaving the combustion chamber (1), wherein a return duct (14) for the separated solid substances is led into the combustion chamber (1), characterised thereby, that the gas exit of the combustion chamber (1) is connected to a second flue pass (2), that the separator (10) is connected at the solid substance side with the second flue pass (2), that the second flue pass (2) receives a solid substance layer (12) flowed through by gas, in particular by air, and is constructed as solid substance cooler and that the second flue pass (2) is connected at the gas exit side with the separator (10).

2. Furnace according to claim 1, characterised thereby, that the solid substance layer (12) is a solid bed.

3. Furnace according to claim 1, characterised thereby, that the solid substance layer (12) is a fluidised bed.

4. Furnace according to one of the claims 1 to 3, characterised thereby, that the second flue pass (2) is divided up into chambers (19, 20, 21, 22) and that each chamber (19, 20, 21, 22) is provided with its own system for the supply of gas.

5. Furnace according to one of the claims 1 to 4, characterised thereby, that the combustion chamber (1) and the second flue pass (2) are arranged in pressure vessels (26, 27), which are separated one from the other, and that the combustion chamber (1) and the second flue pass (2) are one connected with the other by a pressure duct (28).

6. Furnace according to one of the claims 1 to 4, characterised thereby, that the combustion chamber (1) and the second flue pass (2) are surrounded by a common pressure vessel.

7. Furnace according to one of the claims 1 to 6, characterised thereby that heating surfaces (29) are suspended in the gas current downstream of the combustion chamber (1).

8. Method for the combustion of fuel in a furnace, in particular a fluidised bed furnace, with a combustion chamber which is flowed through upwardly from below according to the claims 1 to 7, in which method solid substances are separated in a filtering separator out of the gas leaving the combustion chamber and conducted back into the furnace, characterised thereby, that the separated solid substances are fed to a second flue pass, in which they are flowed through as solid substance layer by a gas, in particular by air, and cooled by cooling surfaces.

9. Method according to claim 8, characterised thereby, that the volume current of the gas flowing through the solid substance layer (12) is set in accordance with the distribution of the heat, which is to be conducted away, over the gas and the heating surfaces.

10. Method according to claim 8 or 9, characterised thereby, that a reaction zone is formed in the lower part of the combustion chamber by the supply of fuel and combustion air and that a secondary combustion zone is formed thereover up to the entry into the separator by the addition of further combustion air.

11. Method according to claim 10, characterised thereby, that the temperature in the secondary combustion zone is set to a higher value than in the reaction zone.

12. Method according to claim 10 or 11, characterised thereby, that the air flowing through the solid substance layer (12) is conducted as combustion air into the secondary combustion zone.

13. Method according to one of the claims 10 to 12, characterised thereby, that additional fuel is supplied to the secondary combustion zone.

14. Method according to one of the claims 8 to 13, characterised by an excess pressure, which is suitable for the operation of a gas turbine, in the combustion chamber and in the second flue pass.

15. Method according to one of the claims 8 to 13, characterised by a pressure, which slightly exceeds the atmospheric pressure, in the combustion chamber and in the second flue pass.

## Revendications

1. Foyer, en particulier foyer à lit fluidisé, comportant une chambre de combustion (1), parcourue par un courant orienté de bas en haut, dont la sortie de gaz est reliée à un séparateur filtrant (10) destiné à opérer la séparation entre les solides et les gaz quittant la chambre de combustion (1), une conduite de recyclage (14) destinée aux solides séparés menant à la chambre de combustion (1), caractérisé en ce que la sortie de gaz de la chambre de combustion (1) est raccordée au deuxième circuit (2), en ce que le séparateur (10) est relié, côté solides, au deuxième circuit (2), en ce que le deuxième circuit (2) reçoit une couche de solide (12) parcourue par un écoulement de gaz, en particulier d'air et est réalisé sous forme de refroidisseur de solides et en ce que le deuxième circuit est relié au séparateur (10), du côté de la sortie des gaz.

2. Foyer selon la revendication 1, caractérisé en ce que la couche de solides (12) est un lit fixe.

3. Foyer selon la revendication 1, caractérisé en ce que la couche de solides (12) est un lit fluidisé.

4. Foyer selon l'une des revendications 1 à 3, caractérisé en ce que le deuxième circuit (2) est subdivisé en chambres (19 ,20, 21, 22) et en ce que chaque chambre est pourvue d'un système propre d'amenée de gaz.

5. Foyer selon l'une des revendications 1 à 4, caractérisé en ce que la chambre de combustion (1) et le deuxième circuit (2) sont disposés dans des récipients sous pression (26, 27) séparés l'un de l'autre et en ce que la chambre de combustion (1) et le deuxième circuit (2) sont reliés ensemble au moyen d'une conduite sous pression (28).

6. Foyer selon l'une des revendications 1 à 4, caractérisé en ce que la chambre sous pression (1) et le deuxième circuit (2) sont placés dans un récipient sous pression commun.

7. Foyer selon l'une des revendications 1 à 6, caractérisé en ce que des surfaces de chauffe (29) sont fixées dans le courant de gaz, en aval de la chambre de combustion (1) dans la direction de l'écoulement.

8. Procédé de combustion de combustible dans un foyer, en particulier dans un foyer à lit fluidisé, comportant une chambre de combustion, parcourue par un courant orienté de bas en haut, selon les revendications 1 à 7, dans lequel, dans un séparateur filtrant, on opère à partir des gaz sortant de la chambre de combustion la séparation des solides et leur recyclage dans le foyer, caractérisé en ce que les solides séparés sont amenés dans un deuxième circuit, dans lequel, leur couche est traversée par un courant de gaz, en particulier par de l'air, et refroidis au moyen de surfaces de refroidissement.

9. Procédé selon la revendication 8, caractérisé en ce que le débit volumétrique des gaz s'écoulant à travers la couche de solides est réglé selon la quantité de chaleur à évacuer répartie entre les gaz et les surfaces de chauffe.

10. Procédé selon la revendication 8 ou 9, caractérisé en ce qu'une zone de réaction est formée dans la partie inférieure de la chambre de combustion, par apport de combustible et d'air de combustion, et qu'une zone de postcombustion est formée au-dessus d'elle, par apport d'air de combustion supplémentaire, jusqu'à l'entrée dans le séparateur.

11. Procédé selon la revendication 10, caractérisé en ce que la température dans la zone de postcombustion est réglée à une valeur supérieure à celle de la zone de réaction.

12. Procédé selon la revendication 10 ou 11, caractérisé en ce que le courant d'air passant dans la couche de solides est guidé dans la zone de postcombustion, à titre d'air de combustion.

13. Procédé selon l'une des revendication 10 à 12, caractérisé en ce que du combustible supplémentaire est amené à la zone de postcombustion.

14. Procédé selon l'une des revendication 8 à 13, caractérisé par le fait qu'il règne dans la chambre de combustion et dans le deuxième circuit une surpression convenant au fonctionnement d'une turbine à gaz.

15. Procédé selon l'une des revendication 8 à 13, caractérisé par le fait que la pression régnant dans la chambre de combustion et dans le deuxième circuit est légèrement supérieure à la pression atmosphérique.
